# EUROPÄISCHE PATENTSCHRIFT

(11) **EP 1 519 862 B1**
(45) Veröffentlichungstag und Bekanntmachung des Hinweises auf die Patenterteilung: **21.02.2007**
(21) Anmeldenummer: 03761402.1
(22) Anmeldetag: 20.05.2003
(51) Int. Cl.: B60S 1/40

(54) **WISCHBLATT**
WIPER BLADE
BALAI D'ESSUIE-GLACE

(30) Priorität: 28.06.2002 DE 10229608; 19.12.2002 DE 10259480
(43) Veröffentlichungstag der Anmeldung: 06.04.2005
(73) Patentinhaber: ROBERT BOSCH GMBH, 70442 Stuttgart (DE)
(72) Erfinder: HEINRICH, Laurent, F-67400 Illkirch-Graffenstaden (FR); MUEHLPFORTE, Kurt, 77815 Buehl (DE); DIETRICH, Jan, 77815 Buehl (DE); SURKAMP, Gundolf, 76530 Baden-Baden (DE)
(86) Internationale Anmeldenummer: PCT/DE2003/001638
(87) Internationale Veröffentlichungsnummer: WO 2004/002792

(56) Entgegenhaltungen:
- DE-A- 4 413 661
- DE-A- 10 000 374
- DE-A- 10 036 135
- DE-A- 19 924 662

## Beschreibung

### Stand der Technik

Die Erfindung geht von einem Wischblatt nach dem Oberbegriff des Anspruchs 1 aus.

Bekannte Scheibenwischer weisen einen Wischarm auf, der auf einer Wischerwelle sitzt. Diese wird von einem Wischermotor angetrieben. Mit dem freien Ende des Wischarms ist ein Wischblatt gelenkig verbunden. Es besitzt in der Regel ein mehrgliederiges Tragbügelsystem mit einem Mittelbügel. An diesem sind untergeordnete Bügel angelenkt, von denen zumindest einige mit Krallen an ihren Enden eine Wischleiste halten. Es sind auch gelenklose Wischblätter bekannt, die anstelle des Tragbügelsystems ein senkrecht zur Fahrzeugscheibe federndes, elastisches Tragelement besitzen, das aus Kunststoff hergestellt ist. Um die Federeigenschaft zu verbessern, kann es mindestens eine Federschiene aus Federstahl aufweisen. Das Tragelement besitzt im unbelasteten Zustand eine stärkere Krümmung als die Fahrzeugscheibe, so dass sich die Wischleiste unter der Anpresskraft des Wischarms mit einer geeigneten Druckverteilung an die Fahrzeugscheibe anlegt.

Gelenklose Wischblätter bauen sehr niedrig, was bezüglich ihres strömungstechnischen Verhaltens und der Geräuschentwicklung im Fahrtwind sehr günstig ist. Aus der DE 199 24 662 A1 ist ein Scheibenwischer mit einem gelenklosen Wischblatt bekannt, das über ein so genanntes "Sidelock-System" mit einem Wischarm gelenkig verbunden ist. Hierzu dient ein zweiteiliges Verbindungsstück, dessen erstes Teil einen blockförmigen Abschnitt mit einer Lagerbohrung aufweist und das mit angeformten Formschlusselementen die als Tragelement dienenden Federleisten seitlich und von unten umfasst. Das zweite Teil ist an dem freien Ende des Wischarms befestigt, der ein zur Fahrzeugscheibe hin offenes, u-förmiges Profil aufweist. Ein Stift ist seitlich und quer zur Längsrichtung des Wischarms und zu dem Wischblatt zeigend in das zweite Teil eingesetzt und in der Lagerbohrung des ersten Teils des Verbindungsstücks schwenkbar gelagert.

Parallel zum Stift ist am zweiten Teil des Verbindungsstücks in Längsrichtung versetzt eine Brücke angeordnet, die an ihrem freien Ende zur Seite des Stifts hin abgewinkelt ist. In einer Montageposition, in der das Wischblatt quer zur Längsrichtung des Wischarms gehalten wird, kann der Stift in die Lagerbohrung des Verbindungsteils geschoben werden. Wird das Wischblatt anschließend parallel zur Längsrichtung des Wischarms gedreht, übergreift die Brücke das Wischblatt und verriegelt es mit ihrem abgewinkelten Ende, so dass seitliche Führungsflächen des blockförmigen Abschnitts des ersten Teils des Verbindungsstücks im montierten Zustand zwischen dem abgewinkelten Ende der Brücke und einer gegenüberliegenden Fläche des zweiten Teils gerührt sind. Die Brücke taucht in der Betriebsstellung des Wischblatts in eine entsprechende Nut des ersten Teils ein und schließt etwa bündig mit dessen Oberseite ab. Zur Demontage muss das Wischblatt in die entgegengesetzte Richtung geschwenkt werden, bis das abgewinkelte Ende außer Eingriff gebracht ist und das Wischblatt vom Stift gezogen werden kann.

Aus der DE 28 30 508 A 1 ist eine Wischvorrichtung für Scheiben von Kraftfahrzeugen bekannt. Diese besitzt ein Wischblatt, mit dem ein Gelenkzapfen fest verbunden ist. Der Gelenkzapfen erstreckt sich in einer Ebene, die im Wesentlichen parallel zu der Fahrzeugscheibe verläuft, und ist in einer Lagerbohrung des Wischarms drehbar gelagert. Damit der Gelenkzapfen während einer Wischbewegung nicht aus der Lagerbohrung gleitet, ist das Wischblatt in axialer Richtung des Gelenkzapfens gegenüber dem Wischarm verriegelt, indem ein in Verlängerung des Wischarms vorspringender Ansatz in eine Nut eines Vorsprungs eingreift, der seitlich vom Wischblatt mit diesem fest verbunden ist. Die äußere Flanke der Nut bildet eine Schulter, an der der Vorsprung in der Betriebsstellung anliegt und somit das Wischblatt axial zum Gelenkzapfen verriegelt.

Weiterhin ist aus der DE-A-4413661 ein Wischblatt mit den Merkmalen des Oberbegriffs des Anspruchs 1 bekannt.

### Vorteile der Erfindung

Nach der Erfindung umfasst das Gelenk eine Kappe, die das Verbindungsteil überdeckt und an diesem befestigt ist. Während des Betriebs sichert die Kappe das Wischblatt und die Wischstange in der montierten Position. Man erreicht dadurch eine sehr flach bauende Verbindung zwischen einem vorzugsweise gelenklosen Wischblatt und einer Wischstange, wobei die Verbindungsteile für Linkslenkerfahrzeuge und Rechtslenkerfahrzeuge gleich sind. Nur die Wischstange ist spiegelbildlich ausgebildet. Die erfindungsgemäße Gestaltung ermöglicht zahlreiche Varianten mit Freiräumen für gestalterisches Design, so dass das Wischblatt an zahlreiche Fahrzeugtypen angepasst werden kann. Da die meisten Funktionen zum Anpassen des Scheibenwischers an ein Kraftfahrzeug auf das Verbindungsteil und die Gelenkachse konzentriert sind, kann die Wischstange einfach gehalten werden.

Die Kappe weist an ihrer Seite zur Wischstange hin eine Tasche auf, die zur Fahrzeugscheibe und in Längsrichtung der Wischstange zu dieser hin offen ist und diese seitlich übergreift. Dabei kann die Tasche in Verlängerung der Wischstange angeordnet sein, so dass eine Verlängerung der Wischstange über die Gelenkachse hinaus in der Betriebsstellung in die Tasche der Kappe eingreift. Die Tasche kann auch von der Antriebsseite der Wischstange in Längsrichtung gesehen vor der Gelenkachse angeordnet sein, wobei sie die Wischstange antriebsseitig zur Gelenkachse umfasst. Dadurch kann die Kappe und die Wischstange kürzer ausfallen.

Wird das Wischblatt um etwa 90° zur Wischstange geschwenkt, verlässt die Verlängerung der Wischstange bzw. die Wischstange selbst die Tasche und das Wischblatt kann von der an der Wischstange befestigten Gelenkachse abgezogen werden. Die Montage erfolgt in umgekehrter Richtung.

Anstelle einer Tasche kann die Kappe einen Führungszapfen aufweisen, der in einer Gabel am Ende der Wischstange geführt ist.

Um die Wischqualität zu verbessern ist in der Regel zu beiden Seiten des Verbindungsteils ein Spoiler auf das Tragelement aufgesetzt. Die Kappe verbindet die beiden Teile des Spoilers harmonisch, indem sie mit Anschlussprofilen an die Teile anschließt, so dass sich im Wesentlichen ein durchgehender Spoiler mit guten Anströmverhältnissen für den Fahrtwind ergibt. Da die Wischstange ein flaches, rechteckiges Querschnittprofil besitzt, dessen lange Seite etwa parallel zur Fahrzeugscheibe verläuft, unterstützt sie die Funktion des Spoilers, wenn sie auf der Anströmseite angeordnet ist. Das Verbindungsteil in Form einer Blechkralle, kann aus Metall oder Kunststoff hergestellt sein. Es hat einen parallel zum Tragelement verlaufenden Rücken, an dessen Längsseiten zur einfachen Montage Rastnasen angeformt sind, so dass es quer zum Tragelement aufgeklippst werden kann. Vom Tragelement abgewandt hat das Verbindungsteil zwei Seitenwangen. Sie haben Aufnahmeöffnungen für die Gelenkachse und sind durch ein Lagerrohr miteinander verbunden, wenn die Gelenkachse drehbar im Verbindungsteil gelagert ist. Die Seitenwangen weisen zur leichten Montage der Kappe Rastvertiefungen oder Rastlöcher auf, in die Rastnasen der Kappe eingreifen. Zusätzlich kann die Kappe durch einen Klipp gehalten werden, der das Lagerrohr umfasst. Die Kappe kann zusätzlich dadurch gesichert werden, dass ein freies Ende der Gelenkachse über die Seitenwange vorsteht und in eine Vertiefung der Seitenwand der Kappe eingreift.

Die Wischstange kann oberhalb der Gelenkachse, in gleicher Ebene wie die Gelenkachse oder unterhalb der Gelenkachse verlaufen. Im ersten oder zweiten Fall ist es zweckmäßig, dass das über die Gelenkachse vorstehende Ende zum Gummiprofil des Wischblatts abgewinkelt oder abgeschrägt ist, damit die Kappe mit ihrer Tasche niedriger gestaltet werden kann. Im dritten Fall kann die Wischstange gerade ausgeführt sein. Sie erzeugt besonders günstige Anströmverhältnisse, da sie die untere Seite des Spoilerprofils verlängert und nur einen geringen Abstand zur Fahrzeugscheibe besitzt.

Ist die Gelenkachse in dem Verbindungsteil drehbar gelagert, ist sie an einem aus dem Verbindungsteil herausragenden Ende mit der Wischstange fest verbunden. Dies kann durch Stoffschluß, z. B. durch Schweißen, durch Form- oder Kraftschluß, z. B. durch Nieten, Pressen oder dgl. erfolgen.

Nach einer Ausgestaltung der Erfindung besitzt die Gelenkachse an ihrem Ende, das der Wischstange zugeordnet ist, einen flachen Kopf, in dem Nietlöcher für Niete vorgesehen sind. In diesem Fall besitzt die Wischstange entsprechende Nietlöcher und wird mit der Gelenkachse vernietet. Bei einer anderen Ausführung besitzt die Gelenkachse einen flachen Kopf, an dem ein quer zur Gelenkachse vorstehender Vielkant, z. B. ein Drei-, Vier- oder Sechskant angeformt ist, der in eine entsprechende Öffnung der Wischstange eingepresst und an seinem überstehenden Ende durch Taumelnieten gesichert ist. Taumelnieten ist ein Nietverfahren, bei dem während des Nietens das Nietwerkzeug eine Taumelbewegung ausführt. Vor der Montage werden die Wischstangen und Köpfe der Gelenkachsen schwarz lackiert.

Bei einer weiteren Ausführung besitzt die Gelenkachse einen Kopf mit einem Schlitz zur Aufnahme der flachen Wischstange, die mittels eines Querstifts oder einer Niete im Schlitz gesichert ist. Alternativ dazu kann die Wischstange im Bereich der Gelenkachse eine Nabe besitzen, die die Gelenkachse umfasst und durch einen Querstift auf dieser gesichert ist.

Gemäß einer weiteren Ausgestaltung ist die flache Wischstange an ihrem Ende um ca. 90° verdrillt, so dass eine Breitseite eines Endes quer zur Gelenkachse liegt. Das Ende besitzt eine Aufnahmebohrung für eine Gelenkachse mit einem Bund, an dem sich ein gerändelter Sitz anschließt, auf den die Aufnahmebohrung gepresst wird und durch eine verstemmte Scheibe gesichert ist. Das über die Gelenkachse hinausragende Ende ist zum Gummiprofil des Wischblatts hin abgeschrägt und greift in eine zugehörige Tasche der Kappe ein. Diese Ausführung besitzt eine kurze Baulänge der Gelenkachse. Trotzdem bleibt die günstige Lage der Wischstange zum Spoiler im überwiegenden Bereich der Wischstange erhalten.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines montierten Wischblatts von oben,
- Fig. 2: im Wesentlichen eine Ansicht nach Fig. 1, jedoch ohne Kappe,
- Fig. 3: eine perspektivische Teilansicht einer Kappe nach Fig. 1 mit einer Wischstange und einer Gelenkachse von unten,
- Fig. 4: eine Seitenansicht eines Wischblatts und einer Wischstange, die an ihrem Ende zum Gummiprofil hin abgeknickt ist,
- Fig. 5: eine Seitenansicht eines Wischblatts und einer geraden Wischstange, die unterhalb der Gelenkachse verläuft,
- Fig. 6: eine Variante zu Fig. 5,
- Fig. 7: eine Seitenansicht eines Wischblatts und einer Wischstange, deren Ende um ihre Längsachse um 90° gedreht verläuft und deren über die Gelenkachse hinausragender Teil zum Gummiprofil hin abgeschrägt ist,
- Fig. 8: eine Wischstange mit einer Gelenkachse nach Fig. 7 in einer Draufsicht,
- Fig. 9: eine Gelenkachse nach Fig. 8,
- Fig. 10: eine perspektivische Draufsicht eines Wischblatts und einer Wischstange im Ausschnitt, deren freies Ende gabelförmig gestaltet ist, und mit einem Führungszapfen an der Kappe zusammenwirkt,
- Fig. 11: eine Variante nach Fig. 10, jedoch ohne Kappe,
- Fig. 12: eine Seitenansicht eines Wischblatts und einer geraden Wischstange, die unterhalb der Gelenkachse verläuft und in einer Tasche der Kappe auf der Antriebsseite des Wischarms vor der Gelenkachse geführt ist,
- Fig. 13 und 14: Varianten zu Fig. 12,
- Fig. 15: eine perspektivische Teilansicht der Ausführung nach Fig. 14 von oben, jedoch ohne Kappe,
- Fig. 16: eine Gelenkachse nach Fig. 15,
- Fig. 17: eine Gelenkachse nach Fig. 18,
- Fig. 18: eine perspektivische Teilansicht eines Wischarms und eines Wischblatts mit einer Gelenkachse nach Fig. 17 von unten,
- Fig. 19: eine perspektivische Ansicht einer Kappe schräg von oben,
- Fig. 20: eine Gelenkachse passend zur einer Kappe nach Fig. 19,
- Fig. 21: eine Variante zu Fig. 20,

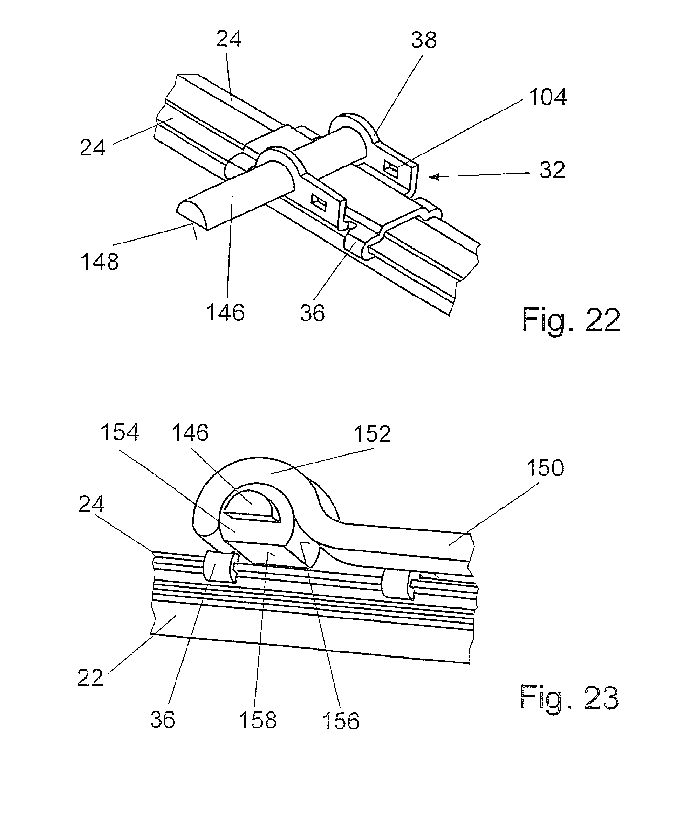

- Fig. 22: eine perspektivische Teilansicht eines Wischblatts mit einem Verbindungsstück und einer darin festsitzenden Gelenkachse von oben,
- Fig. 23: eine Ansicht einer Ausführung nach Fig. 22, mit einer Wischstange schräg von unten,
- Fig. 24: eine perspektivische Ansicht einer Kappe mit einer Wischstange für eine Ausführung nach Fig. 22 von unten,
- Fig. 25: eine Variante zu Fig. 25 und
- Fig. 26: eine Gelenkachse nach Fig. 25.

### Beschreibung der Ausführungsbeispiele

Ein gelenkloses Wischblatt 20 besitzt ein Gummiprofil 22, das an einem flachen Tragelement 24 befestigt ist. Dieses besteht in der Regel aus einer oder zwei Federleisten, die in dem oberen Teil des Gummiprofils 22 eingelassen sind. Zum gelenkigen Verbinden des Wischblatts 20 mit einer Wischstange 28 eines nicht näher dargestellten Wischarms ist im mittleren Bereich des Wischblatts 20 ein Gelenk 30 vorgesehen. Dieses besitzt als Verbindungsteil eine Blechkralle 32, deren Rücken 34 das Tragelement 24 überspannt und mit Rastnasen 36 an diesem befestigt ist. Die Rastnasen 36 können in Längsrichtung über das Tragelement 24 geschoben werden oder als Klippverbindung ausgebildet sein und durch elastisches Verformen quer zum Tragelement 24 aufgeklippst werden. Zwischen den Rastnasen 36, die an den Enden der Blechkralle 32 seitlich vorgesehen sind, stehen an den Längsseiten 66 der Blechkralle 32 Seitenwangen 38 vom Gummiprofil 22 abgewandt ab. Sie halten ein Lagerrohr 40, das quer zum Wischblatt 20 und etwa parallel zu einer nicht dargestellten Fahrzeugscheibe verläuft. In das Lagerrohr 40 ist eine Gelenkachse 42 gesteckt, die an einer Seite zur Wischstange 28 hin mit einem Kopf 44 aus dem Lagerrohr 40 herausragt.

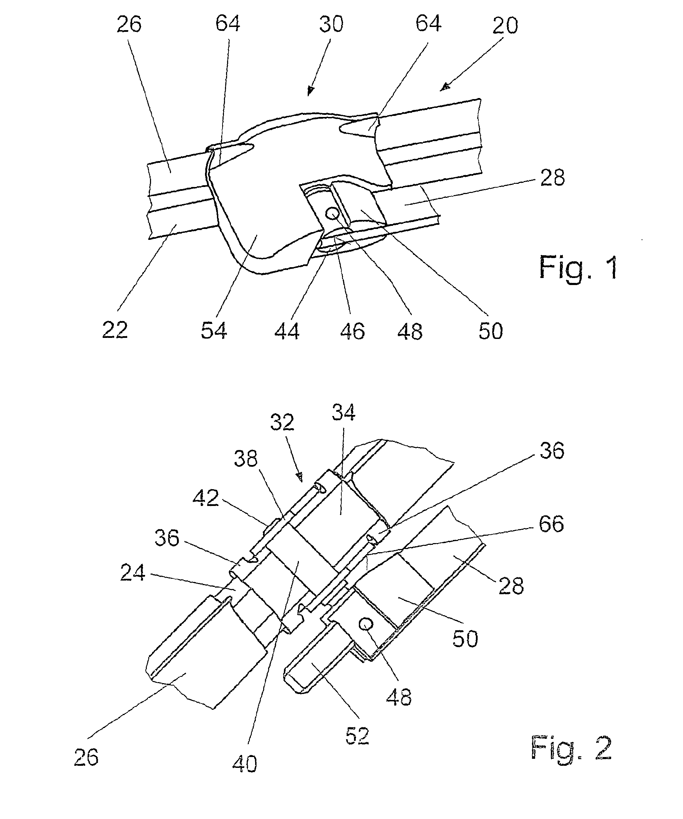

Die Wischstange 28 besitzt einen rechteckigen Querschnitt, wobei die längeren Seiten etwa parallel zur Gelenkachse 42 verlaufen. Bei den Ausführungen nach Fig. 1 bis 3 greift die Wischstange 28 in einen Schlitz 46 des Kopfes 44 der Gelenkachse 42 ein und ist durch einen Querstift 48 gesichert. Die Wischstange 28 ragt mit einem Finger 52 über den Schlitz 46 hinaus. Der Finger 52 ist schmaler als die Wischstange 28 und liegt an der dem Wischblatt 20 zugewandten Seite der Wischstange 28.

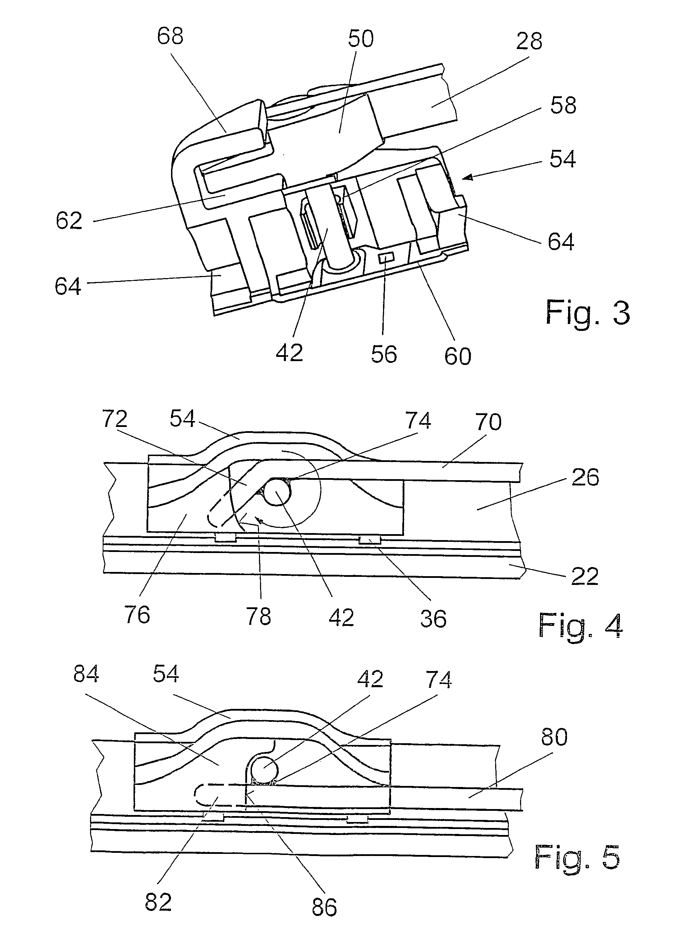

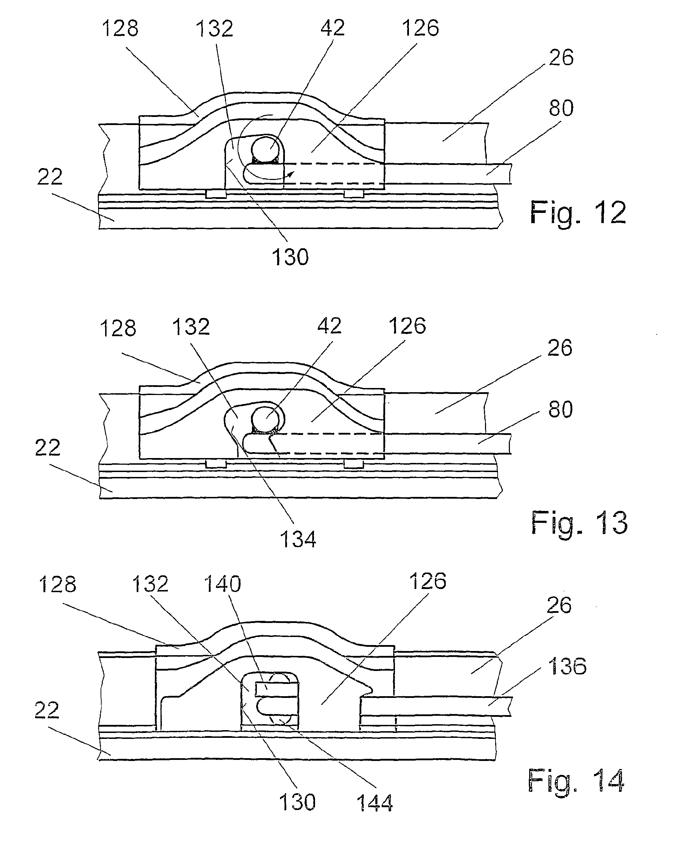

In Längsrichtung gesehen sind zu beiden Seiten der Blechkralle 32 Teile eines Spoilers 26 an dem Tragelement 24 befestigt, die bei einer Anströmung durch den Fahrtwind den Anpressdruck auf die Fahrzeugscheibe erhöhen. Die Blechkralle 32 wird von einer Kappe 54 überdeckt, die sich mit Anschlussprofilen 64 harmonisch an die Teile des Spoilers 26 anschließt. Die Kappe 54 ist lösbar an der Blechkralle 32 befestigt. Sie besitzt hierzu an der Innenseite ihrer Seitenwände 60 Rastnasen 56, die in entsprechende Öffnungen 104 (Fig. 11) bzw. Vertiefungen der Blechkralle 32 einrasten. Außerdem besitzt sie in ihrem mittleren Bereich einen Klipp 58 zum Befestigen auf dem Lagerrohr 40. Die Gelenkachse 42 ragt mit ihrem Ende, das dem Kopf 44 abgewandt ist (Fig. 2), über die Seitenwange 38 hinaus, wobei dieses Ende in eine Vertiefung der Seitenwand 60 der Kappe 54 eingreift (Fig. 3) und somit deren Halt auf der Blechkralle 32 unterstützt.

Die Kappe 54 besitzt an der Seite der Wischstange 28 eine zur Fahrzeugscheibe hin offene Tasche 62 (Fig. 3), in die der Finger 52 der Wischstange 28 in der Betriebsstellung eingreift, in der das Wischblatt 20 an der Fahrzeugscheibe anliegt. Eine Außenwand 68 der Tasche 62 verhindert, dass sich die Wischstange 28 mit ihrem Finger 52 nach außen bewegt, so dass die Gelenkachse 42 in axialer Richtung verriegelt ist. Die Tasche 62 wird weit gehend von einer Abdeckung 50 abgedeckt, die auf der Gelenkachse 42 sitzt und sich harmonisch an die Kontur der Wischstange 28 und der Kappe 54 anschließt. Die Abdeckung 50 ist gleichzeitig ein Aufprallschutz bzw.

Dämpfungselement. Sie verhindert eine Beschädigung der Fahrzeugscheibe, falls der Wischarm bei einem Wechsel des Wischblatts versehentlich 20 auf die Fahrzeugscheibe schlägt.

Die Ausführungen nach Fig. 4 bis Fig. 6 zeigen Wischstangen 70, 80, die durch Schweißnähte 74 mit einem Ende der Gelenkachse 42 verbunden sind. Die Wischstange 70 nach Fig. 4 verläuft oberhalb der Gelenkachse 42 und ragt mit einem zum Gummiprofil 22 hin abgewinkelten Ende 72 über die Gelenkachse 42 hinaus. Das abgewinkelte Ende 72 greift in der gezeigten Betriebsstellung des Wischblatts 20 in eine Tasche 76 der Kappe 54 ein, wobei der zum Wischarm 70 weisende Rand 78 der Kappe 54 so verläuft, dass das Wischblatt 20 in einer in Pfeilrichtung um ca. 90° gedrehten Position leicht von der Gelenkachse 42 abgezogen werden kann. In dieser Stellung wird das Wischblatt 20 auch montiert, indem es auf die Gelenkachse 42 gesteckt und anschließend in entgegengesetzter Richtung geschwenkt wird. In gleicher Weise werden die Wischblätter 20 nach Fig. 1, Fig. 5 bis Fig. 7, Fig. 10 und Fig. 11 montiert und demontiert. Durch die Abwinklung des Endes 72 kann die Tasche 76 flach ausgebildet werden, wodurch der Windwiderstand verringert und der optische Eindruck verbessert wird.

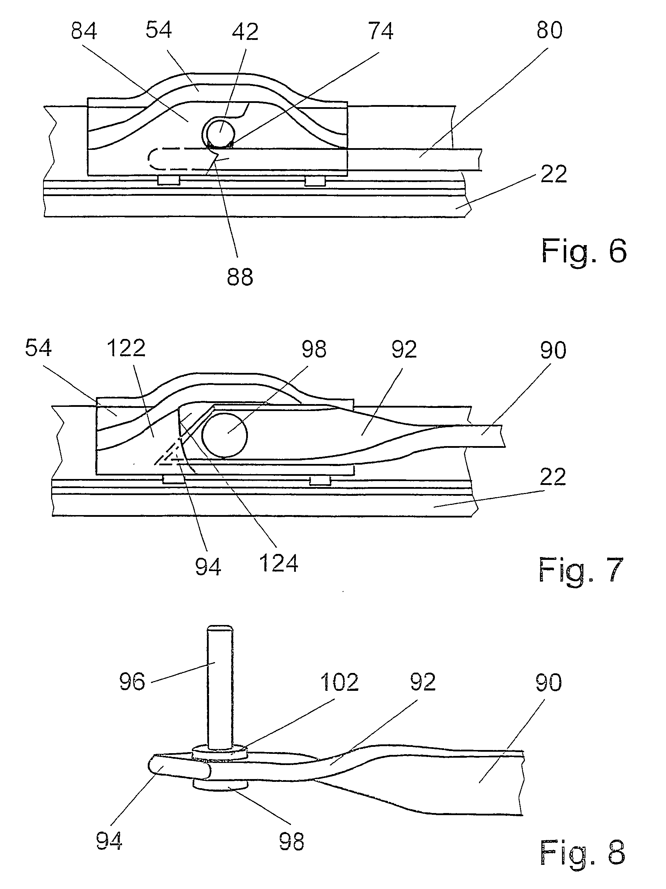

Einen gleichen Effekt erzielt man, wenn die Wischstange 80 bei den Ausführungen nach Fig. 5 und Fig. 6 unterhalb der Gelenkachse 42 verläuft und mit ihrem geraden, über die Gelenkachse 42 hinaus verlängerten Ende 82 in eine Tasche 84 der Kappe 54 eingreift. Auch hierbei ist der Rand 86 der Tasche 84 so ausgebildet, dass in der geschwenkten Montagestellung eine Montage oder Demontage leicht möglich ist. Während bei den Ausführungen nach Fig. 4 und Fig. 5 das Wischblatt 20 bei der Montage um ca. 90° gedreht werden muss, kann das Wischblatt 20 bei der Ausführung nach Fig. 6 bereits bei einem kleineren Schwenkwinkel montiert und demontiert werden. Dies wird dadurch erreicht, dass der Rand 88 der Tasche 84 unter einem geringeren Winkel zur Längsrichtung des Wischblatts 20 verläuft.

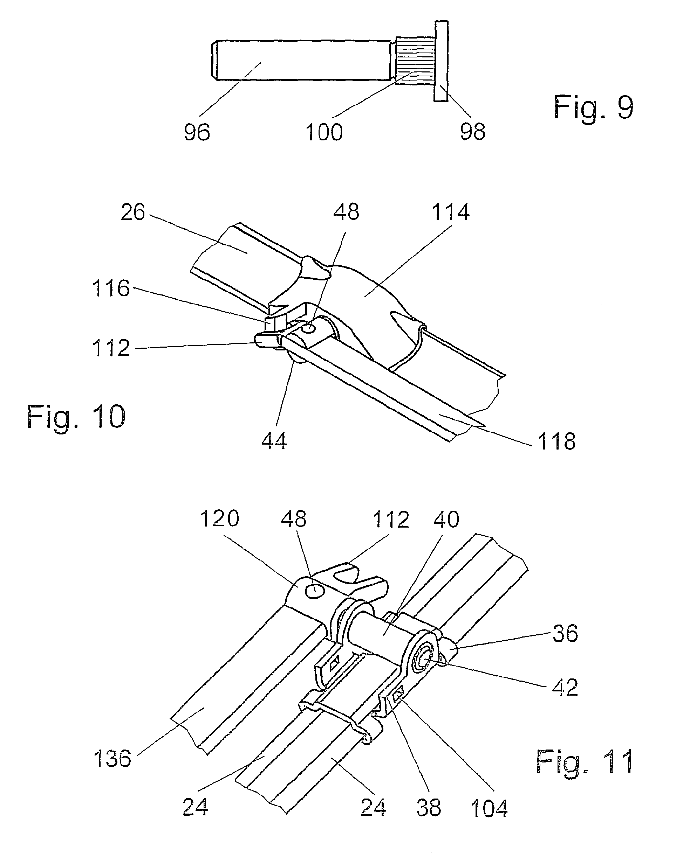

Die Ausführung nach Fig. 7 ermöglicht ein sehr schmales Gelenk 30, indem die Wischstange 90 an ihrem Ende 92 in Längsrichtung um etwa 90° geschränkt ist, so dass die längeren Seiten ihres rechteckigen Profils im Bereich der Gelenkachse 96 quer zu dieser verlaufen. Das über die Gelenkachse 96 hinausragende Ende besitzt eine Abschrägung 94, die zum Gummiprofil 22 hin geneigt verläuft und greift mit der Abschrägung 94 in eine Tasche 122 der Kappe 54. Zur Montage und Demontage ist der Rand 124 der Tasche 122 entsprechend ausgebildet. Die Gelenkachse 96 (Fig. 9) besitzt einen gerändelten Sitz 100, auf den die Wischstange 90 mit einer Aufnahmeöffnung bis an einen Bund 98 gepresst und durch eine Scheibe 102 gesichert ist.

Bei den Ausführungen nach Fig. 10 und Fig. 11 ist das über die Gelenkachse 42 hinausragende Ende der Wischstangen 118 als Gabel 112 ausgebildet, die in der dargestellten Betriebsstellung einen Führungszapfen 116 der Kappe 114 umfasst. Um die Kappe 114 flach gestalten zu können, ist es zweckmäßig, dass die Gabel 112 zum Gummiprofil 22 hin geneigt verläuft. Während die Wischstange 118 nach Fig. 16 wie bei der Ausführung nach Fig. 1 in einem Schlitz 46 des Kopfes 44 der Gelenkachse 42 gesteckt und durch einen Querstift 48 gesichert ist, besitzt die Wischstange 118 nach Fig. 11 eine Nabe 120, die auf dem freien Ende der Gelenkachse 42 sitzt und durch einen Querstift 48 gesichert ist. Grundsätzlich kann die Wischstange 118 auch wie die Wischstangen der zuvor beschriebenen Ausführungen mit der Gelenkachse 42 verschweißt sein.

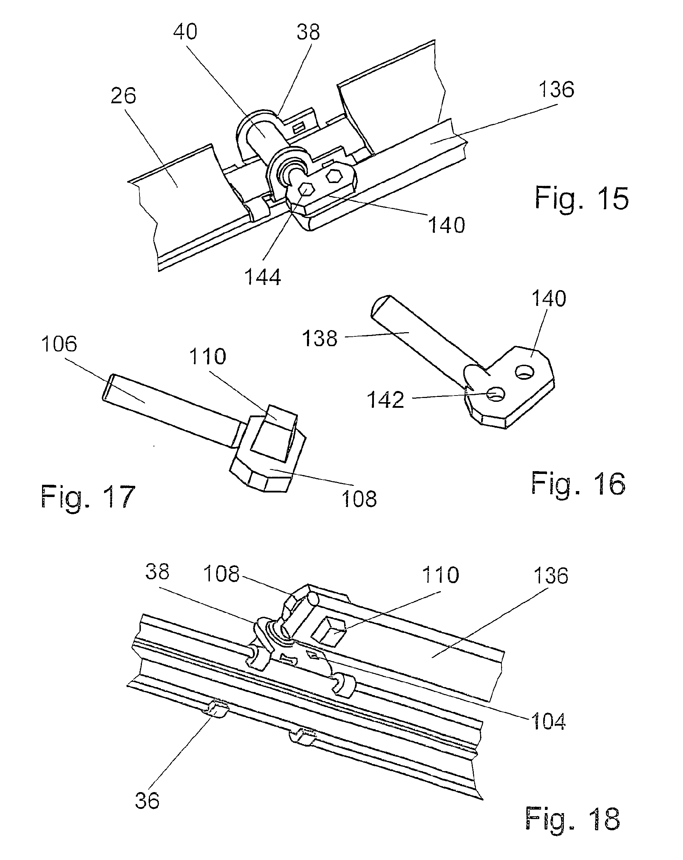

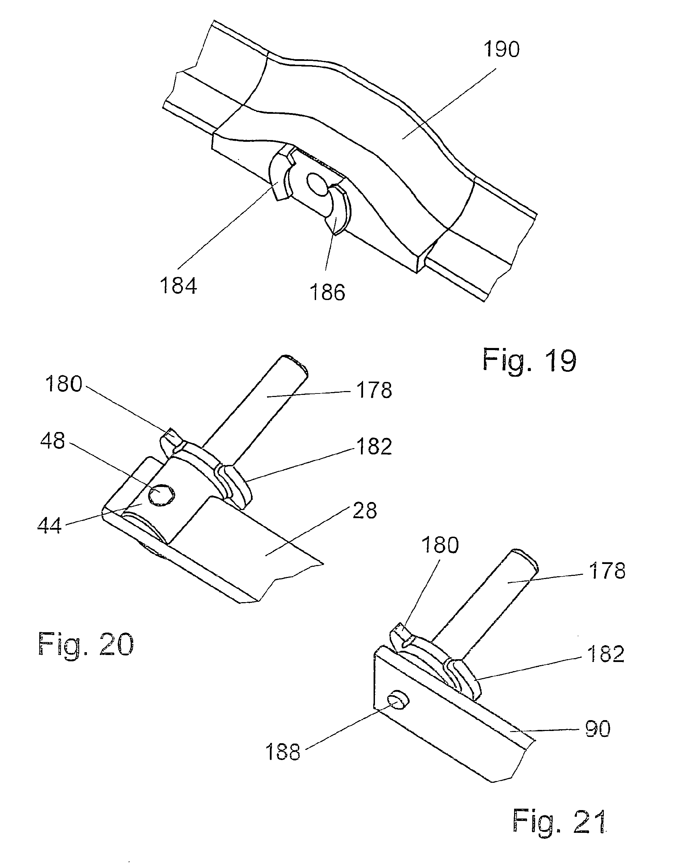

Die Ausführungen nach Fig. 12 bis Fig. 15 und Fig. 18 gleichen den Ausführungen nach Fig. 5 und Fig. 6. Auch hier verlaufen die Wischstangen 80 und 136 unterhalb der Gelenkachsen 42 bzw. 106 und 138. Während die Wischstange 80 nach Fig. 12 und Fig. 13 an dem freien Ende der Gelenkachse 42 angeschweißt ist, besitzt die Gelenkachse 138 nach Fig. 14 und Fig. 15 einen flachen Kopf 140 mit zwei Nietlöchern 142, der durch Niete 144 mit der Wischstange 136 verbunden ist (Fig. 15). Die Gelenkachse 106 (Fig. 17) besitzt einen flachen Kopf 108, an dem ein Vierkant 110 angeformt ist, der in eine entsprechende Öffnung der Wischstange 136 eingepresst ist und ggf. in einem Taumelverfahren vernietet wird (Fig. 18).

Die Kappen 54 für die Ausführungen nach Fig. 12 bis Fig. 15 und Fig. 18 besitzen auf der Seite zur Wischstange 80, 136 Taschen 126, die die Wischstange 80, 136 auf ihrer Antriebsseite vor der Gelenkachse 42, 106, 138 umfassen, so dass die Wischstange 80, 136 nicht über die Gelenkachse 42, 106, 138 hinausragen muss. So lassen sich sehr flach bauende Wischblätter 20 erzielen, wobei die Kappe 54 sehr flach und geschlossen ausgeführt werden kann. Zwischen der Tasche 126 und dem vorderen Teil der Kappe 128 bleibt nur ein kleines Montagefenster 132 in der äußeren Seitenwand offen. Während die Montagefenster 132 nach Fig. 12 und Fig. 14 einen Rand 130 aufweisen, der etwa senkrecht zum Gummiprofil 22 verläuft, ist der Rand 134 des Montagefensters 132 nach Fig. 13 zum Gummiprofil 22 so geneigt, dass eine Montage und Demontage des Wischblatts 20 unter einem Winkel erfolgen kann, der kleiner ist als 90°. Zur Demontage ist das Wischblatt 20 in Richtung des Pfeiles zu schwenken, der in Fig. 12 eingezeichnet ist.

Bei einer anderen Ausführung besitzt die Gelenkachse 178 (Fig. 20, 21) zur Wischstange 28, 90 hin zwei diametral zueinander angeordnete Flügel 180, 182, die sich radial zur Gelenkachse 28, 90 und in Längsrichtung der zugeordneten Wischstange 28, 90 erstrecken. Die Gelenkachse 178 nach Fig. 20 besitzt wie die Gelenkachse 42 nach Fig. 1 einen Schlitz 46 in einem Kopf 44, in den die Wischstange 28 eingesetzt und durch einen Querstift, z.B. eine Niete, gesichert ist. Die Gelenkwelle 178 nach Fig. 21 besitzt stirnseitig einen Nietzapfen 178, mit dem sie an der Wischstange 90 befestigt ist, die wie die Wischstange 90 nach Fig. 8 in Längsrichtung um 90° gedreht ist. In beiden Fällen greifen die Flügel 180, 182 in montierter Stellung des Wischblatts 20 in entsprechend ausgerichtete Taschen 184, 186 einer Tasche 190 (Fig. 19) nach Art eines Bajonettverschlusses ein. Durch Drehen des Wischblatts 20 um 90° kann der Bajonettverschluss zur Demontage gelöst oder bei der Montage geschlossen werden.

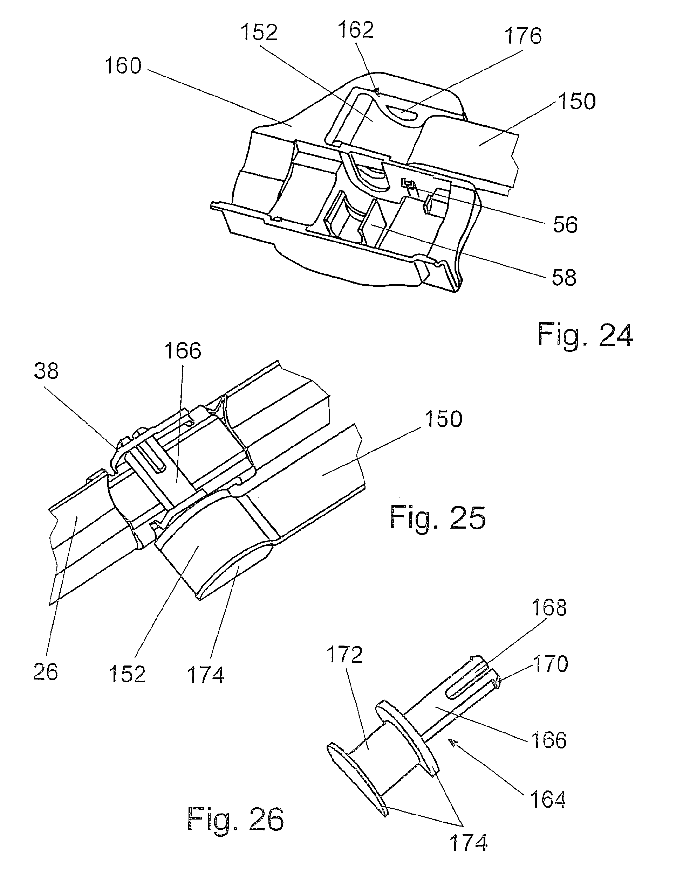

Während bei den bisher beschriebenen Ausführungen die Gelenkachse 42, 96, 106, 138 drehbar in dem Lagerrohr 40 der Blechkralle 32 gelagert und mit der Wischstange 20, 70, 80, 90, 118, 136 verbunden ist, ist die Gelenkachse 146, 164 drehfest mit der Blechkralle 32 und drehbar mit der Wischstange 150 verbunden, z.B. indem sie mit einem unrunden Querschnittprofil in Form eines Vielkants oder abgeflachten Zylinders in entsprechenden Öffnungen der Seitenwangen 38 gehalten wird. Bei der Ausführung nach Fig. 24 besitzt die Gelenkachse 146 ein halbrundes Querschnittprofil mit einer Abflachung 148, die zum Gummiprofil 22 weist. Sie ist drehfest in Öffnungen der Seitenwangen 38 der Blechkralle 32 eingesetzt und trägt an ihrem seitlich zur Wischstange 150 vorstehenden Ende drehfest eine Lagerhülse 154, die an ihrem äußeren Umfang einen zylindrischen Bereich 156 aufweist und zum Gummiprofil 22 hin einen abgeflachten Bereich 158 haben kann. Auf der Lagerhülse 154 ist ein entsprechend gebogenes Ende 152 der Wischstange 150 drehbar gelagert (Fig. 23). Das gebogene Ende 152 kann auch unmittelbar auf einem rund oder halbrund profilierten Teil der Gelenkwelle 146, 164 gelagert sein. Die Lagerhülse 154 und das Ende 152 der Wischstange 150 werden in einer Lagertasche 162 einer Kappe 160 geführt. Die Kappe 160 ist mittels Rastnasen 56 und eines Klipps 58 an der Blechkralle 32 bzw. an der Gelenkachse 146 befestigt. Außerdem steht die Gelenkachse 146 über die Lagerhülse 154 vor und greift in eine Vertiefung 176 der Kappe 160 ein. Das Wischblatt 20 kann an der Wischstange 150 montiert werden, indem es mit der montierten Kappe 160 so weit gedreht wird, dass das gebogene Ende 152 zwischen Kappe 160 und Lagerhülse 154 eingefädelt werden kann.

Die Variante nach Fig. 24 besitzt eine Gelenkachse 164 mit einem Befestigungsbereich 166, der einen im Wesentlichen rechteckigen Querschnitt und einen quer zu den längeren Seiten verlaufenden Längsschnitt 168 aufweist. Die längeren Seiten des Querschnittprofils verlaufen etwa parallel zum Tragelement 24. An den äußeren Seiten sind an den Enden des Befestigungsbereichs 166 Rastnasen 170 vorgesehen, die durch eine Öffnung in der zugeordneten Seitenwange 38 ragen und mit dem Rand dieser Öffnung verrasten. Zum anderen Ende weist die Gelenkachse 164 einen Lagerbereich 172 auf, der von zwei Bünden 174 in axialer Richtung begrenzt wird. Auf dem Lagerbereich 172 ist das gebogene Ende 152 der Wischstange 150 gelagert und wird durch die Lagertasche 152 der Kappe 160 in der montierten Position gesichert.

### Bezugszeichen

- 20: Wischblatt
- 22: Gummiprofil
- 24: Tragelement
- 26: Spoiler
- 28: Wischstange
- 30: Gelenk
- 32: Blechkralle
- 34: Rücken
- 36: Rastnase
- 38: Seitenwange
- 40: Lagerrohr
- 42: Gelenkachse
- 44: Kopf
- 46: Schlitz
- 48: Querstift
- 50: Abdeckung
- 52: Finger
- 54: Kappe
- 56: Rastnase
- 58: Klipp
- 60: Seitenwand
- 62: Tasche
- 64: Anschlussprofil
- 66: Längsseite
- 68: Außenwand
- 70: Wischstange
- 72: Ende
- 74: Schweißnaht
- 76: Tasche
- 78: Rand
- 80: Wischstange
- 82: Ende
- 84: Tasche
- 86: Rand
- 88: Rand
- 90: Wischstange
- 92: geschränktes Ende
- 94: Abschrägung
- 96: Gelenkachse
- 98: Bund
- 100: Sitz
- 102: Scheibe
- 104: Rastvertiefung
- 106: Gelenkachse
- 108: Kopf
- 110: Vielkant
- 112: Gabel
- 114: Kappe
- 116: Führungszapfen
- 118: Wischstange
- 120: Nabe
- 122: Tasche
- 124: Rand
- 126: Tasche
- 128: Kappe
- 130: Rand
- 132: Montagefenster
- 134: Rand
- 136: Wischstange
- 138: Gelenkachse
- 140: Kopf
- 142: Nietloch
- 144: Niet
- 146: Gelenkachse
- 148: Abflachung
- 150: Wischstange
- 152: Ende
- 154: Lagerhülse
- 156: zylindrischer Bereich
- 158: abgeflachter Bereich
- 160: Kappe
- 162: Lagertasche
- 164: Gelenkachse
- 166: Befestigungsbereich
- 168: Längsschlitz
- 170: Rastnase
- 172: Lagerbereich
- 174: Bund
- 176: Vertiefung
- 178: Gelenkachse
- 180: Flügel
- 182: Flügel
- 184: Tasche
- 186: Tasche
- 188: Nietzapfen
- 190: Kappe

## Patentansprüche

1. Wischblatt (20) mit einem Verbindungsteil (32), das an einem Tragelement (24) des Wischblatts (20) angebracht ist und eine Gelenkachse (42, 96, 106, 138, 146, 164, 178) eines Gelenks (30) aufweist, deren freies Ende mit einer Wischstange (28, 70, 80, 90, 118, 136, 150) verbindbar ist, **dadurch gekennzeichnet, dass** das Gelenk (30) eine Kappe (54, 114, 128, 160, 190) umfasst, die das Verbindungsteil (32) überdeckt, an diesem befestigt ist und während des Betriebs das Wischblatt (20) und die Wischstange (28, 70, 80, 90, 118, 136, 150) in der montierten Position sichert, wobei die Kappe (54, 114, 128, 160) zur Wischstange (28, 70, 80, 90, 118, 136, 150) eine Tasche (62, 76, 84, 122, 126, 164) aufweist, die zur Fahrzeugscheibe und in Längsrichtung der Wischstange (28, 70, 80, 90, 118, 136, 150) zu dieser hin offen ist und diese seitlich übergreift.

2. Wischblatt (20) nach einem der vorhergehenden Ansprüche, **dadurch gekennzeichnet, dass** auf dem Tragelement (24) in Längsrichtung zu beiden Seiten des Verbindungsteils (32) ein Spoiler (26) befestigt ist, an dessen Teile sich die Kappe (54, 114, 128, 160, 190) mit einem Anschlussprofil (64) harmonisch anschließt.

3. Wischblatt (20) nach Anspruch 2, **dadurch gekennzeichnet, dass** sich durch die Kappe (54, 114, 128, 160, 190) mit ihren Anschlussprofilen (64) ein im Wesentlichen durchgehender Spoiler (26) ergibt.

4. Wischblatt (20) nach Anspruch 3, **dadurch gekennzeichnet, dass** die Oberseite der Kappe (54, 114, 128, 160, 190) an ihrer Abströmseite zwischen den Anschlussprofilen (64) überhöht ist. (Fig. 1 und Fig. 4)

5. Wischblatt (20) nach einem der Ansprüche 2 bis 4, **dadurch gekennzeichnet, dass** die Anströmseite des Spoilers (26) der Wischstange (28) zugewandt ist.

6. Wischblatt (20) nach einem der vorhergehenden Ansprüche, **dadurch gekennzeichnet, dass** die Gelenkachse (42, 96, 106, 138, 178) in dem Verbindungsteil (32) drehbar gelagert ist, das als Blechkralle ausgebildet ist und mittels seitlich an seinem Rücken (34) angebrachter Rastnasen (36) auf dem Tragelement (24) befestigt ist.

7. Wischblatt (20) nach Anspruch 6, **dadurch gekennzeichnet, dass** die Blechkralle (32) an ihren Längsseiten (66) nach oben stehende Seitenwangen (38) besitzt, die durch ein Lagerrohr (40) verbunden sind, in dem die Gelenkachse (42, 96, 106, 138, 178) drehbar gelagert ist. (Fig. 2)

8. Wischblatt (20) nach einem der Ansprüche 6 oder 7, **dadurch gekennzeichnet, dass** die Kappe (54, 114, 128, 160, 190) mittels Rastnasen (56) an der Blechkralle (32) gehalten wird, die in Rastvertiefungen (104) in den Seitenwangen (38) der Blechkralle (32) eingreifen (Fig. 11).

9. Wischblatt (20) nach einem der Ansprüche 7 oder 8, **dadurch gekennzeichnet, dass** die Kappe (54, 114, 128, 160, 190) im Bereich des Lagerrohrs (42) einen Klipp (58) besitzt, mit dem sie auf dem Lagerrohr (40) oder der Gelenkachse (164) befestigt ist.

10. Wischblatt (20) nach einem der Ansprüche 7 bis 9, **dadurch gekennzeichnet, dass** die Gelenkachse (42, 96, 106, 138, 146, 164, 190) an einem Ende über eine Seitenwange (38) der Blechkralle (32) vorsteht und drehfest mit der Wischstange (28, 70, 80, 90, 118, 136) verbunden ist, während ihr anderes geringfügig über die zugeordnete Seitenwange (38) vorstehendes Ende in eine Vertiefung der Kappe (54, 114, 128, 160, 190) eingreift (Fig. 2, Fig. 3 und Fig. 24).

11. Wischblatt (20) nach einem der vorhergehenden Ansprüche, **dadurch gekennzeichnet, dass** die Wischstange (28, 70, 80, 90, 118) über die Gelenkachse (42, 96) hinaus verlängert ist und mit dem verlängerten Teil in einer Tasche (62, 76, 84, 122) oder an einem Führungszapfen (116) der Kappe (54, 114) geführt ist. (Fig. 1 bis Fig. 11)

12. Wischblatt (20) nach Anspruch 11, **dadurch gekennzeichnet, dass** der überstehende Teil der Wischstange (28, 70, 80, 118) zum Gummiprofil (22) hin abgewinkelt ist.

13. Wischblatt (20) nach einem der vorhergehenden Ansprüche, **dadurch gekennzeichnet, dass** die Wischstange (80, 136, 150) unterhalb der Gelenkachse (42, 106, 138, 146, 164) und oberhalb des Gummiprofils (22) verläuft.

14. Wischblatt (20) nach einem der vorhergehenden Ansprüche, **dadurch gekennzeichnet, dass** die Gelenkachse (42, 96, 106, 138) mittels einer Schweißnaht (74) mit der Wischstange (28) verbunden ist. (Fig. 4 bis Fig.6 und Fig. 11, Fig. 12)

15. Wischblatt (20) nach einem der Ansprüche 1 bis 13, **dadurch gekennzeichnet, dass** die Gelenkachse (42, 178) zur Wischstange (28, 118) hin einen Kopf (44) besitzt, der einen Schlitz (46) zur Aufnahme der Wischstange (28, 118) hat, die mittels eines Querstifts (48) im Schlitz (46) gesichert ist. (Fig. 1, Fig. 10, Fig. 20)

16. Wischblatt (20) nach einem der Ansprüche 1 bis 13, **dadurch gekennzeichnet, dass** die Wischstange (90) an ihrem der Gelenkachse (96) zugewandten Ende um ihre Längsachse um etwa 90 Grad gedreht ist, sodass ihre breite Seite quer zur Gelenkachse (96) verläuft. (Fig. 8, Fig. 21)

17. Wischblatt (20) nach Anspruch 16, **dadurch gekennzeichnet, dass** die Gelenkachse (96) mit einem Bund (98) an ihrem Ende an der Wischstange (90) anliegt, die auf einen sich an den Bund (98) anschließenden, gerändelten Sitz (100) gepresst und durch eine Scheibe (102) gesichert ist. (Fig. 8, Fig. 9)

18. Wischblatt (20) nach einem der Ansprüche 16 oder 17, **dadurch gekennzeichnet, dass** die Wischstange (90) an dem Ende, das über die Gelenkachse (96) hinausragt, eine Abschrägung (94) zum Gummiprofil (22) hin aufweist, und mit dem abgeschrägten Teil in ihrer Betriebsstellung in eine Tasche (122) der Kappe (54) eingreift.

19. Wischblatt (20) nach einem der Ansprüche 1 bis 15, **dadurch gekennzeichnet, dass** die Kappe (114) seitlich zur Wischstange (118) hin einen Führungszapfen (116) aufweist, der in das als Gabel (112) ausgebildete Ende der Wischstange (118) eingreift. (Fig. 10, Fig. 11)

20. Wischblatt (20) nach einem der vorhergehenden Ansprüche, **dadurch gekennzeichnet, dass** die Tasche (126) der Kappe (128) zwischen der Gelenkachse (42, 138) und dem antriebsseitigen Ende der Wischstange (80, 136) angeordnet ist und diese seitlich übergreift. (Fig. 12 bis Fig. 14)

21. Wischblatt (20) nach einem der vorhergehenden Ansprüche, **dadurch gekennzeichnet, dass** die Gelenkachse (138) zur Wischstange einen flachen Kopf (140) mit zwei Nietlöchern (142) besitzt, der durch Niete (144) mit der Wischstange (136) vernietet ist. (Fig. 15)

22. Wischblatt (20) nach einem der vorhergehenden Ansprüche, **dadurch gekennzeichnet, dass** die Gelenkachse (106) einen flachen Kopf (108) aufweist, an dem ein sich quer erstreckender Vielkant (110) angeformt ist, der in eine passende Öffnung der Wischstange (136) eingepresst ist und dessen vorstehender Teil taumelgenietet ist. (Fig. 18)

23. Wischblatt (20) nach einem der vorhergehenden Ansprüche, **dadurch gekennzeichnet, dass** die Gelenkachse (178) zwei diametral zueinander angeordnete Flügel (180, 182) aufweist, die sich radial zur Gelenkachse (178) und in Längsrichtung der Wischstange (28, 90) erstrecken und im montierten Zustand in entsprechend ausgerichtete, seitliche Taschen (184, 186) der Kappe (190) nach Art eines Bajonettverschlusses eingreifen. (Fig. 19 bis 21)

24. Wischblatt (20) nach einem der vorhergehenden Ansprüche, **dadurch gekennzeichnet, dass** die Gelenkachse (146) mit einem unrunden Querschnittprofil in entsprechenden Öffnungen der Seitenwangen (38) drehfest in der Blechkralle (32) gehalten ist, wobei auf ihrem zur Wischstange (150) hin vorstehenden Teil ein entsprechend gebogenes Ende (152) der Wischstange (150) schwenkbar gelagert ist, das in einer Lagertasche (162) der Kappe (160) geführt ist.

25. Wischblatt (20) nach Anspruch 25, **dadurch gekennzeichnet, dass** die Gelenkachse (146) ein Halbrundprofil mit einer zum Gummiprofil (22) weisenden Abflachung (148) besitzt und in entsprechenden Öffnungen der Seitenwangen (38) drehfest in der Blechkralle (32) gehalten ist, wobei auf dem zur Wischstange (150) hin vorstehenden Teil eine Lagerhülse (154) mit einem angepassten, zylindrischen Bereich (156) und einem abgeflachten Bereich (158) drehfest montiert ist, auf der das entsprechend gebogene Ende (152) der Wischstange (150) schwenkbar gelagert ist. (Fig. 24)

26. Wischblatt (20) nach Anspruch 24, **dadurch gekennzeichnet, dass** die Gelenkachse (146) mit ihrem freien Ende in eine Vertiefung (176) in einer Seitenwand der Lagertasche (162) eingreift.

27. Wischblatt (20) nach einem der Ansprüche 24 oder 26, **dadurch gekennzeichnet, dass** die Gelenkachse (164) einen Lagerbereich (172) zwischen zwei axialen Bünden (174) aufweist, auf dem der gebogene Teil (152) der Wischstange (150) gelagert ist, und einen Befestigungsbereich (156) mit einem rechteckigen Querschnittprofil und einem Längsschlitz (158) besitzt, der an den Außenseiten seiner Enden Rastnasen (170) aufweist, mit denen er in einer entsprechenden Öffnung der zugeordneten Seitenwange (38) verrastet ist. (Fig. 25 und Fig. 26)

## Claims

1. Wiper blade (20) with a connecting part (32) which is mounted on a carrying element (24) of the wiper blade (20) and has a pivot pin (42, 96, 106, 138, 146, 164, 178) of a joint (30), the free end of which can be connected to a wiper rod (28, 70, 80, 90, 118, 136, 150), **characterized in that** the joint (30) comprises a cap (54, 114, 128, 160, 190), which covers and is attached to the connecting part (32) and which during operation secures the wiper blade (20) and the wiper rod (28, 70, 80, 90, 118, 136, 150) in the fitted position, the cap (54, 114, 128, 160) having a pocket (62, 76, 84, 122, 126, 164) which faces the wiper rod (28, 70, 80, 90, 118, 136, 150) and is open towards the windscreen and towards the wiper rod (28, 70, 80, 90, 118, 136, 150) in the longitudinal direction thereof, and which overlaps the latter laterally.

2. Wiper blade (20) according to one of the preceding claims, **characterized in that** a spoiler (26) is attached to the carrying element (24) in the longitudinal direction on both sides of the connecting part (32), the cap (54, 114, 128, 160, 190) with an adjoining profile (64) harmoniously adjoining parts of said spoiler.

3. Wiper blade (20) according to Claim 2, **characterized in that** the cap (54, 114, 128, 160, 190) with its adjoining profiles (64) results in a substantially continuous spoiler (26).

4. Wiper blade (20) according to Claim 3, **characterized in that** the top of the cap (54, 114, 128, 160, 190) is cambered on its trailing edge between the adjoining profiles (64). (Fig. 1 and Fig. 4)

5. Wiper blade (20) according to one of Claims 2 to 4, **characterized in that** the leading edge of the spoiler (26) faces the wiper rod (28).

6. Wiper blade (20) according to one of the preceding claims, **characterized in that** the pivot pin (42, 96, 106, 138, 178) is rotatably mounted in the connecting part (32), which takes the form of a sheet metal claw and is attached to the carrying element (24) by means of catches (36) mounted laterally on the back (34) thereof.

7. Wiper blade (20) according to Claim 6, **characterized in that** the sheet metal claw (32) has raised side faces (38) on its longitudinal sides (66), said faces being connected by a bearing tube (40) in which the pivot pin (42, 96, 106, 138, 178) is rotatably mounted. (Fig. 2)

8. Wiper blade (20) according to either of Claims 6 or 7, **characterized in that** the cap (54, 114, 128, 160, 190) is held on the sheet metal claw (32) by means of catches (56), which engage in catch recesses (104) in the side faces (38) of the sheet metal claw (32) (Fig. 11).

9. Wiper blade (20) according to either of Claims 7 or 8, **characterized in that** the cap (54, 114, 128, 160, 190) has a clip (58) in the area of the bearing tube (42) by means of which it is attached to the bearing tube (40) or the pivot pin (164).

10. Wiper blade (20) according to one of Claims 7 to 9, **characterized in that** the pivot pin (42, 96, 106, 138, 146, 164, 190) at one end protrudes beyond a side face (38) of the sheet metal claw (32) and is rotationally locked to the wiper rod (28, 70, 80, 90, 118, 136), while the other end thereof protruding slightly beyond the associated side face (38) engages in a recess in the cap (54, 114, 128, 160, 190) (Fig. 2, Fig. 3 and Fig. 24).

11. Wiper blade (20) according to one of the preceding claims, **characterized in that** the wiper rod (28., 70, 80, 90, 118) is extended beyond the pivot pin (42, 96), and with its extended part is guided in a pocket (62, 76, 84, 122) or on a guide pin (116) of the cap (54, 114). (Fig. 1 to Fig. 11)

12. Wiper blade (20) according to Claim 11, **characterized in that** the protruding part of the wiper rod (28, 70, 80, 118) is angled towards the rubber profile (22).

13. Wiper blade (20) according to one of the preceding claims, **characterized in that** the wiper blade (80, 136, 150) runs beneath the pivot pin (42, 106, 138, 146, 164) and above the rubber profile (22).

14. Wiper blade (20) according to one of the preceding claims, **characterized in that** the pivot pin (42, 96, 106, 138) is connected to the wiper rod (28) by means of a weld (74). (Fig. 4 to Fig. 6 and Fig. 11, Fig. 12)

15. Wiper blade (20) according to one of Claims 1 to 13, **characterized in that** the pivot pin (42, 178) has a head (44) facing the wiper rod (28, 118), said head having a slot (46) to accommodate the wiper rod (28, 118) which is secured in the slot (46) by means of a cross pin (48). (Fig. 1, Fig. 10, Fig. 20)

16. Wiper blade (20) according to one of Claims 1 to 13, **characterized in that** at its end facing the pivot pin (96) the wiper rod (90) is rotated by approximately 90 degrees about its longitudinal axis so that its broad side runs transversely to the pivot pin (96). (Fig. 8, Fig. 21)

17. Wiper blade (20) according to Claim 16, **characterized in that** the pivot pin (96), with a collar (98) at the end thereof, bears against the wiper rod (90), which is pressed against a knurled seat (100) adjoining the collar (98) and is secured by a washer (102). (Fig. 8, Fig. 9)

18. Wiper blade (20) according to either of Claims 16 or 17, **characterized in that** the wiper rod (90), at the end protruding beyond the pivot pin (96), has a bevel (94) towards the rubber profile (22), and in its operating position engages with the bevelled part in a pocket (122) of the cap (54).

19. Wiper blade (20) according to one of Claims 1 to 15, **characterized in that** the cap (114) has a guide pin (116), which laterally faces the wiper rod (118) and engages in the end of the wiper rod (118) which takes the form of a fork (112). (Fig. 10, Fig. 11)

20. Wiper blade (20) according to one of the preceding claims, **characterized in that** the pocket (126) of the cap (128) is arranged between the pivot pin (42, 138) and the drive-side end of the wiper rod (80, 136) and overlaps the latter laterally. (Fig. 12 to Fig. 14)

21. Wiper blade (20) according to one of the preceding claims, **characterized in that** the pivot pin (138) has a flat head (140) with two rivet holes (142) facing the wiper blade and riveted by rivets (144) to the wiper rod (136). (Fig. 15)

22. Wiper blade (20) according to one of the preceding claims, **characterized in that** the pivot pin (106) has a flat head (108), onto which a transversely extending polygonal element (110) is integrally formed, the latter being pressed into a matching opening in the wiper rod (136) and the protruding part thereof being wobble-riveted. (Fig. 18)

23. Wiper blade (20) according to one of the preceding claims, **characterized in that** the pivot pin (178) has two diametrically opposed wings (180, 182) extending radially to the pivot pin (178) and in the longitudinal direction of the wiper blade (28, 90) and in the fitted state engaging in correspondingly aligned lateral pockets (184, 186) of the cap (190) in the manner of a bayonet lock. (Fig. 19 to 21)

24. Wiper blade (20) according to one of the preceding claims, **characterized in that** the pivot pin (146) having a non-circular cross-sectional profile is held rotationally locked in corresponding openings in the side faces (38) in the sheet metal claw (32), a correspondingly bent end (152) of the wiper rod (150) being pivotally mounted on the part thereof which protrudes towards the wiper rod (150) and being guided in a bearing pocket (162) of the cap (160).

25. Wiper blade (20) according to Claim 25, **characterized in that** the pivot pin (146) has a semicircular profile with a flattened area (148) facing the rubber profile (22) and is held rotationally locked in corresponding openings in the side faces (38) in the sheet metal claw (32), a bearing bushing (154) with a matching cylindrical area (156) and a flattened area (158) being rotationally locked on the part which protrudes towards the wiper rod (150), the correspondingly bent end (152) of the wiper rod (150) being pivotally mounted on said bushing. (Fig. 24)

26. Wiper blade (20) according to Claim 24, **characterized in that** the pivot pin (146) engages with its free end in a recess (176) in a side wall of the bearing pocket (162).

27. Wiper blade (20) according to either of Claims 24 or 26, **characterized in that** the pivot pin (164) has a bearing area (172) between two axial collars (174), on which area the bent part (152) of the wiper rod (150) is mounted, and has a fastening area (156) with a rectangular cross-sectional profile and a longitudinal slot (158), which on the outsides of its ends has catches (170) by means of which it is latched in a corresponding opening in the associated side face (38). (Fig. 25 and Fig. 26)

## Revendications

1. Balai d'essuie-glace (20) comportant une pièce de liaison (32) prévue sur un élément de support (24) du balai d'essuie-glace (20) et ayant une articulation (30) avec un axe d'articulation (42, 96, 106, 138, 146, 164, 178) dont l'extrémité libre est reliée à une tige d'essuie-glace (28, 70, 80, 90, 118, 136, 150),
**caractérisé en ce que**
l'articulation (30) comporte un capuchon (54, 114, 128, 160) couvrant la pièce de liaison (32) en étant fixé à celle-ci et retenant la tige d'essuie-glace (28, 70, 80, 90, 118, 136, 150) en position de montage du balai d'essuie-glace (20),
le capuchon (54, 114, 128, 160) ayant une poche (62, 76, 84, 122, 126, 164) en direction de la tige d'essuie-glace (28, 70, 80, 90, 118, 136, 150), cette poche étant ouverte en direction du pare-brise et dans la direction longitudinale de la tige d'essuie-glace (28, 70, 80, 90, 118, 136, 150) pour la couvrir latéralement.

2. Balai d'essuie-glace (20) selon la revendication 1,
**caractérisé en ce qu'**
un déflecteur (26) dont les parties rejoignent de façon harmonieuse le capuchon (54, 114, 128, 160, 190) avec une pièce de raccordement (64) est fixé sur l'élément de support (24), dans la direction longitudinale, des deux côtés de la pièce de liaison (32).

3. Balai d'essuie-glace (20) selon la revendication 2,
**caractérisé en ce que**
le capuchon (54, 114, 128, 160, 190) forme avec son profil de raccordement (64), un déflecteur (26) pratiquement continu.

4. Balai d'essuie-glace (20) selon la revendication 3,
**caractérisé en ce que**
le côté supérieur du capuchon (54, 114, 128, 160, 190) est relevé au niveau de son côté de fuite entre les profils de raccordement (64) (figure 1 et figure 4).

5. Balai d'essuie-glace (20) selon l'une des revendications 2 à 4,
**caractérisé en ce que**
le côté d'attaque du déflecteur (26) est tourné vers la tige d'essuie-glace (28).

6. Balai d'essuie-glace (20) selon l'une des revendications précédentes,
**caractérisé en ce que**
l'axe d'articulation (42, 96, 106, 138, 178) est monté à rotation dans la pièce de liaison (32) elle-même réalisée sous la forme d'une pince en tôle en étant fixée à l'élément de support (24) par des becs d'accrochage (36) prévus latéralement sur son dos (34).

7. Balai d'essuie-glace (20) selon la revendication 6,
**caractérisé en ce que**
la pince en tôle (32) possède des parois latérales (38) en saillie vers le haut sur ses grands côtés (66), ces parois latérales étant reliées par un tube de palier (40) recevant à rotation l'axe d'articulation (42, 96, 106, 138, 178) (figure 2).

8. Balai d'essuie-glace (20) selon l'une des revendications 6 ou 7,
**caractérisé en ce que**
le capuchon (54, 114, 128, 160, 190) est tenu par des becs d'encliquetage (56) à la pince en tôle (32), ces becs pénétrant dans des cavités d'encliquetage (104) des parois latérales (38) de la pince en tôle (32) (figure 11).

9. Balai d'essuie-glace (20) selon l'une des revendications 7 ou 8,
**caractérisé en ce que**
le capuchon (54, 114, 128, 160, 190) comporte un moyen d'encliquetage (58) au niveau du tube de palier (42), par lequel le capuchon est fixé au tube de palier (40) ou à l'axe d'articulation (164).

10. Balai d'essuie-glace (20) selon l'une des revendications 7 à 9,
**caractérisé en ce qu'**
une extrémité de l'axe d'articulation (42, 96, 106, 138, 146, 164, 190) dépasse d'une paroi latérale (38) de la pince en tôle (32) pour être reliée solidairement en rotation à la tige d'essuie-glace (28, 70, 80, 90, 118, 136) alors que son autre extrémité qui dépasse légèrement de la paroi latérale associée (38), pénètre dans une cavité du capuchon (54, 114, 128, 160, 190) (figure 2, figure 3 et figure 24).

11. Balai d'essuie-glace (20) selon l'une des revendications précédentes,
**caractérisé en ce que**
la tige d'essuie-glace (28, 70, 80, 90, 118) prolongée au-delà de l'axe d'articulation (42, 96) est guidée par la partie prolongée dans la poche (62, 76, 84, 122) ou par un goujon de guidage (116) du capuchon (54, 114) (figures 1 à 11).

12. Balai d'essuie-glace (20) selon la revendication 11,
**caractérisé en ce que**
la partie en saillie de la tige d'essuie-glace (28, 70, 80, 118) est recourbée en direction de la lame en caoutchouc (22).

13. Balai d'essuie-glace (20) selon l'une des revendications précédentes,
**caractérisé en ce que**
la tige d'essuie-glace (80, 136, 150) passe sous l'axe d'articulation (42, 106, 138, 146, 164) et au-dessus de la lame en caoutchouc (22).

14. Balai d'essuie-glace (20) selon l'une des revendications précédentes,
**caractérisé en ce que**
l'axe d'articulation (42, 96, 106, 138) est relié par un cordon de soudure (74) à la tige d'essuie-glace (28) (figures 4 à 6 et figure 11, figure 12).

15. Balai d'essuie-glace (20) selon l'une des revendications 1 à 13,
**caractérisé en ce que**
l'axe d'articulation (42, 178) possède une tête (44) ayant une fente (46) pour recevoir la tige d'essuie-glace (28, 118), fixée par l'intermédiaire d'une broche (48) dans la fente (46) (figure 1, figure 10, figure 20).

16. Balai d'essuie-glace (20) selon l'une des revendications 1 à 13,
**caractérisé en ce que**
l'extrémité de la tige d'essuie-glace (90) du côté de l'axe d'articulation (96) est tournée d'environ 90° autour de son axe longitudinal pour que son grand côté soit dirigé transversalement par rapport à l'axe d'articulation (96) (figure 8, figure 21).

17. Balai d'essuie-glace (20) selon la revendication 16,
**caractérisé en ce que**
l'axe d'articulation (96) s'appuie par une collerette (98) à son extrémité contre la tige d'essuie-glace (90), pressée sur un siège moleté (100) adjacent à la collerette (98) en étant retenue par une rondelle (102) (figure 8, figure 9).

18. Balai d'essuie-glace (20) selon l'une des revendications 16 ou 17,
**caractérisé en ce que**
la tige d'essuie-glace (90) dépasse par une extrémité, l'axe d'articulation (96), en ayant une partie en biais (94) dirigée vers la lame en caoutchouc (22) et qui, dans sa position de fonctionnement, pénètre dans la poche (122) du capuchon (54).

19. Balai d'essuie-glace (20) selon l'une des revendications 1 à 15,
**caractérisé en ce que**
le capuchon (114) comporte un goujon de guidage (116) dirigé latéralement vers la tige d'essuie-glace (118) et pénétrant dans l'extrémité en forme de fourche (112) de la tige d'essuie-glace (118) (figure 10, figure 11).

20. Balai d'essuie-glace (20) selon l'une des revendications précédentes,
**caractérisé en ce que**
la poche (126) du capuchon (128) se trouve entre l'axe d'articulation (42, 138) et l'extrémité d'entraînement de la tige d'essuie-glace (80, 136) en dépassant celle-ci latéralement (figure 12 à figure 14).

21. Balai d'essuie-glace (20) selon l'une des revendications précédentes,
**caractérisé en ce que**
l'axe d'articulation (138) possède du côté de la tige d'essuie-glace, une tête plate (140) avec deux orifices à rivet (142) pour être fixé par des rivets (144) à la tige d'essuie-glace (136) (figure 15).

22. Balai d'essuie-glace (20) selon l'une des revendications précédentes,
**caractérisé en ce que**
l'axe d'articulation (106) a une tête plate (108) munie d'une partie en saillie à quatre pans (110) transversale et enfoncée dans une ouverture adaptée de la tige d'essuie-glace (136), la partie en saillie étant rivetée par fluage radial (figure 18).

23. Balai d'essuie-glace (20) selon l'une des revendications précédentes,
**caractérisé en ce que**
l'axe d'articulation (178) comporte deux ailes (180, 182) diamétralement opposées, radiales par rapport à l'axe d'articulation (178) et s'étendant dans la direction longitudinale de la tige d'essuie-glace (28, 90) et qui se montent dans des cavités latérales (184, 186) du capuchon (190) alignées de manière correspondante, selon un assemblage de type baïonnette (figures 19 à 21).

24. Balai d'essuie-glace (20) selon l'une des revendications précédentes,
**caractérisé en ce que**
l'axe d'articulation (146) est tenu par un profil de section non circulaire dans des ouvertures correspondantes des parois latérales (38) de manière solidaire en rotation dans la pince en tôle (32) et sa partie en saillie reçoit en pivotement une extrémité recourbée (152) correspondante de la tige d'essuie-glace (150), cette extrémité étant guidée dans une poche de palier (162) du capuchon (160).

25. Balai d'essuie-glace (20) selon la revendication 24,
**caractérisé en ce que**
l'axe d'articulation (146) a un profil semi-rond avec un méplat (148) tourné vers la lame en caoutchouc (22) et bloqué solidairement en rotation dans des orifices correspondants des parois latérales (38) de la pince en tôle (32), la partie en saillie vers la tige d'essuie-glace (150) recevant une douille de palier (154) ayant une zone cylindrique (156) et une zone aplatie (158) adaptées, cette douille étant installée de manière solidaire en rotation, et portant de manière pivotante l'extrémité recourbée (152) de la tige d'essuie-glace (150) (figure 24).

26. Balai d'essuie-glace (20) selon la revendication 24,
**caractérisé en ce que**
l'axe d'articulation (146) pénètre par son extrémité libre dans une cavité (176) d'une paroi latérale de la poche de palier (162).

27. Balai d'essuie-glace (20) selon l'une des revendications 24 ou 26,
**caractérisé en ce que**
l'axe d'articulation (164) comporte une zone de palier (172) entre deux collerettes axiales (174) recevant la partie recourbée (152) de la tige d'essuie-glace (150) et une zone de fixation (166) à profil de section rectangulaire et une fente longitudinale (168) dont les extrémités des côtés extérieurs comportent des becs d'encliquetage (170) par lesquels cette zone de fixation est accrochée dans une ouverture correspondante des parois latérales associées (38) (figure 25 et figure 26).
